# EUROPEAN PATENT APPLICATION

(11) **EP 2 306 738 A1**
(43) Date of publication of application: **06.04.2011**
(21) Application number: 10175032.1
(22) Date of filing: 02.09.2010
(51) Int. Cl.: H04N 13/00

(54) **Display apparatus and control method thereof**

(30) Priority: 02.09.2009 KR 20090082717
(71) Applicant: Samsung Electronics Co., Ltd., Suwon-si, Gyeonggi-do 442-742 (KR)
(72) Inventor: Choi, Young-hun, Gyeonggi-do (KR); Kim, Ji-won, Seoul (KR)
(74) Representative: Land, Addick Adrianus Gosling

(57) **Abstract**

Provided is a display apparatus and a control method thereof which includes receiving a three-dimensional image signal comprising left eye image data and right eye image data between successive first and second vertical blank sections; generating a third vertical blank section which divides the left eye image data and the right eye image data between the first and second vertical blank sections of the received image signal if the received image signal is determined as a three-dimensional image signal; and displaying an image based on the image signal having the generated third vertical blank section.

## Description

Apparatuses and methods consistent with the present invention relate to a display apparatus which displays an image corresponding to an image signal and a control method thereof, and more particularly, to a display apparatus which processes an image signal to be displayed in an image if an image signal corresponding to a three-dimensional image is input and a control method thereof.

A display apparatus processes an image signal input from an image supplying source, and displays an image in a display panel embodied by a liquid crystal, or the like. The display apparatus scans a scanning line including image information on a panel to display an image in the panel, and configures a single image frame by the scanning line scanned in the panel.

An image signal input to the display apparatus corresponds to a two-dimensional image and a three-dimensional image depending on a property thereof. The two-dimensional image signal includes a single image frame data between two vicinal perpendicular blank sections. On the other hand, the three-dimensional image signal, unlike the two-dimensional image signal, includes image frame data of a left eye image and of a right eye image, and shutter eyeglasses which selectively open and close a left eye and a right eye of a user are provided to the display apparatus to correspond to a display of a three-dimensional image. Accordingly, a user is capable of recognizing a cube of a three-dimensional image.

Since there is no distinction between a left eye image and a right eye image in a two-dimensional image, the shutter eyeglasses do not operate and maintain an opening state of a left eye and a right eye of a user when a two-dimensional image is displayed in the display apparatus.

Accordingly, to display a three-dimensional image signal as a three-dimensional image, it is necessary to divide left eye image frame data and right eye image frame data in an image signal, and to display either of a left eye image or a right eye image that corresponds to an image frame currently displayed on a display.

The foregoing and/or other aspects of the present invention can be achieved by providing a control method of a display apparatus, including: receiving a three-dimensional image signal including a plurality of image frame data in an active section between vicinal first and second vertical blank sections in an image signal; generating a synchronizing signal corresponding to a third vertical blank section which divides the plurality of image frame data in the active section of the received image signal; and displaying the received image signal in an image synchronized with the generated synchronizing signal.

Generating the synchronizing signal may include determining a feature of the third vertical blank section to have the same width as the first and second vertical blank sections.

Generating the synchronizing signal may include: detecting vertical blank information including at least one of a vertical synchronization section width, a vertical front porch value, a vertical back porch value and a vertical synchronization timing of the received image signal, and determining features of the third vertical blank section based on the detected vertical blank information.

The third dimensional image signal may include left eye image frame data and right eye image frame data in the active section, and generating the synchronizing signal may include determining features of the third vertical blank section so that each width of the left eye image frame data and the right eye image frame data divided by the third vertical blank section is the same.

The image signal may include a video ID code based on a high definition multimedia interface (HDMI) standard, and the receiving the image signal may include: detecting the video ID code of the received image signal; and determining whether the image signal corresponds to a two-dimensional image or a three-dimensional image based on the detected video ID code.

The control method may including displaying the received image signal in an image without generating the synchronizing signal if the image signal is determined to correspond to a two-dimensional image based on the detected video ID code.

The three-dimensional image signal may include left eye frame data and right eye image frame data in the active section, and the control method may include generating a logical signal representing which of a left eye image and a right eye image an image frame data in the active section corresponds to if the three-dimensional image signal is received.

The left eye image frame data and the right eye image frame data may be disposed in a disposition order in the active section, and generating the logical signal may include determining which of a left eye image and a right eye image an image frame data in the active section corresponds to based on the disposition order.

The image signal may be received based on the HDMI standard.

Another aspect of the present invention may be achieved by providing a display apparatus, including: a display unit; a signal input unit which receives a three-dimensional image signal including a plurality of image frame data in an active section between vicinal first and second vertical blank sections in an image signal; and an image processing unit which generates a synchronizing signal corresponding to a third vertical blank section which divides the plurality of image frame data in the active section of the received three-dimensional image signal, and processes the received three-dimensional image signal to be synchronized with the generated synchronizing signal to be displayed in an image in the display unit.

The image processing unit may determine a width of the third vertical blank section to have the same width as the first and second vertical blank sections.

The image processing unit may detect vertical blank information which includes at least one of a vertical synchronization section width, a vertical front porch value, a vertical back porch value and a vertical synchronization timing of the received image signal, and determine the third vertical blank section based on the detected vertical blank information.

The third dimensional image signal may include left eye image frame data and right eye image frame data in the active section, and the image processing unit may determine the third vertical blank section so that each width of the left eye image frame data and the right eye image frame data divided by the third vertical blank section is the same.

The image signal may include a video ID code based on a high definition multimedia interface (HDMI) standard, and the image processing unit may detect the video ID code of the received image signal, and determine whether the image signal corresponds to a two-dimensional image or a three-dimensional image based on the detected video ID code.

The image processing unit may process the received image signal to be displayed in an image without generating the synchronizing signal if the image signal is determined to correspond to a two-dimensional image based on the detected video ID code.

The three-dimensional image signal may include left eye frame data and right eye image frame data in the active section, and the image processing unit may generate a logical signal representing which of a left eye image and a right eye image an image frame data in the active section corresponds to if the three-dimensional image signal is received.

The left eye image frame data and the right eye image frame data may be disposed in a disposition order in the active section, and the image processing unit may determine which of a left eye image and a right eye image an image frame data in the active section corresponds to based on the disposition order.

The image signal may be received based on the HDMI standard.

The image processing unit may include: a first image processing unit which generates the synchronizing signal, and synthesizes the generated synchronizing signal with the received image signal to output; and a second image processing unit which scales an image signal output from the first image processing unit to be displayed in an image.

Another aspect of the present invention may be achieved by providing a display apparatus, including: a display unit; a signal input unit which receives a three-dimensional image signal including left eye image frame data and right eye image frame data between vicinal first and second vertical blank sections in an image signal; a first image processing unit which forms a third vertical blank section in a non-image section between the left eye image frame data and the right eye image frame data to convert the received three-dimensional image signal into a two-dimensional type image signal if it is determined that the three-dimensional image signal input to the signal input unit is the three-dimensional image; and a second image processing unit which processes the image signal converted by the first image processing unit to be displayed in an image in the display unit.

The first image processing unit may generate a logical signal representing which of a left eye image and a right eye image an image frame data of the converted two-dimensional image signal corresponds to.

The first image processing unit may determine the width of the third vertical blank section to be the same as the widths of the first and second vertical blank sections.

### BRIEF DESCRIPTION OF THE DRAWINGS

The present invention will become apparent and more readily appreciated from the following description of the exemplary embodiments, taken in conjunction with the accompanying drawings, in which:
FIG. 1 exemplarily illustrates a display system according to a first exemplary embodiment of the present invention;
FIG. 2 is a configuration block diagram related to a display apparatus and shutter glasses in FIG. 1;
FIG. 3 is a configuration block diagram related to a first image processing unit in FIG. 2;
FIG. 4 schematically illustrates configurations of an image signal, a synchronizing signal and a logical signal processed by the first image processing unit in FIG. 3;
FIG. 5 is a control flowchart illustrating a control method of the display apparatus in FIG. 1;
FIG. 6 is a control flowchart illustrating a process of determining whether an input image signal corresponds to a three-dimensional image or not in the display apparatus in FIG. 1;
FIG. 7 illustrates a control flowchart illustrating a process of generating a new synchronizing signal and displaying an image signal in an image to synchronize with the synchronizing signal in the display apparatus in FIG. 1;
FIG. 8 is a control flowchart illustrating a process of generating a logical signal and a shutter control signal and operating shutter eyeglasses depending thereon in the display apparatus in FIG. 1;
FIG. 9 is a configuration block diagram related to a display apparatus according to a second exemplary embodiment of the present invention; and
FIG. 10 is a configuration block diagram illustrating a display system according to a third exemplary embodiment of the present invention.

### DETAILED DESCRIPTION OF EXEMPLARY EMBODIMENTS

Reference will now be made in detail to the exemplary embodiments of the present invention, examples of which are illustrated in the accompanying drawings, wherein like reference numerals refer to like elements throughout. The exemplary embodiments are described below so as to explain the present invention by referring to the figures. Repetitive description with respect to like elements of different embodiments may be omitted for the convenience of clarity.

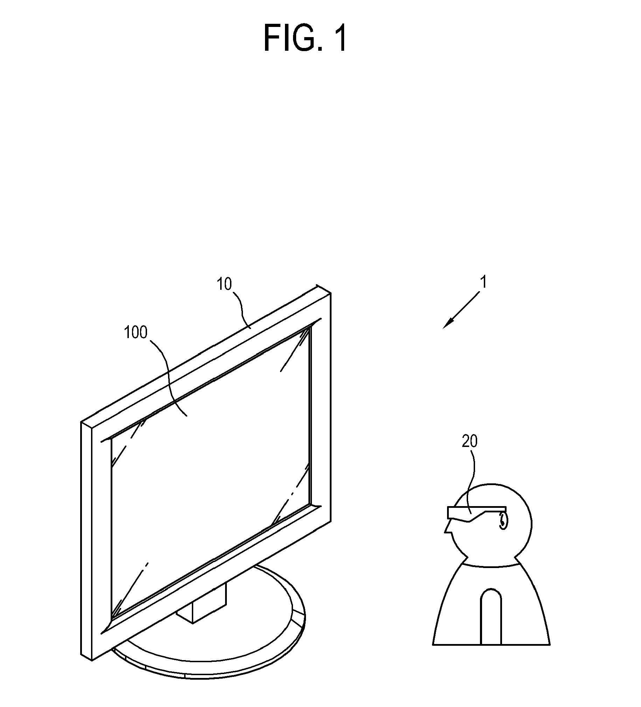

FIG. 1 exemplarily illustrates a display system 1 according to a first exemplary embodiment of the present invention.

As shown in FIG. 1, the display system 1 according to the present exemplary embodiment is a configuration capable of selectively displaying a two-dimensional image and a three-dimensional image. The display system 1 includes a display apparatus 10 including a display unit 100 in which an image is displayed and displaying an image signal input from at least one image supplying source (not shown) in the display unit 100, and shutter eyeglasses 20 operating according to an image displayed in the display unit 100, which is a two-dimensional image or a three-dimensional image.

The display apparatus 10 may be embodied by a television or a computer monitor connected to a computer main body. As an image signal corresponding to a two-dimensional image or a three-dimensional image is input from the image supplying source, the display apparatus 10 selectively processes the image signal and displays the two-dimensional or three-dimensional image in the display unit 100.

An image signal input to the display apparatus 10 in the present exemplary embodiment is exemplarily described as a transition minimized differential signalling (TMDS) based on a high definition multimedia interface (HDMI) standard. However, this is just an exemplary embodiment, and does not define the present invention in embodying the display apparatus 10 and the display system 1 according to the present invention.

If an image signal corresponds to a two-dimensional image, the image signal includes a single image frame data between two vicinal perpendicular blank sections. On the other hand, if an image signal corresponds to a three-dimensional image, the image signal includes left eye image frame data and right eye image frame data between two vicinal perpendicular blank sections. This configuration of the image signal is designated as a frame pecking type according to the HDMI standard, but this standard and designation do not define the present invention.

The display apparatus 10 generates a new synchronizing signal corresponding to a perpendicular blank section which divides left eye image frame data and right eye image frame data with respect to an input three-dimensional image signal, and displays the three-dimensional image signal in an image synchronized with the synchronizing signal. Also, the display apparatus 10 generates a logical signal corresponding to which of a left eye image and a right eye image is currently being displayed as the image.

According to this, if a three-dimensional image signal depending on the frame packing type is input, the display apparatus 10 is capable of processing the three-dimensional image signal with only a software configuration although a separate hardware configuration is not applied thereto.

If a three-dimensional image is displayed in the display apparatus 10, the shutter eyeglasses 20 selectively open or block a sight of a left eye or a right eye of a user according to which of a left eye image and a right eye image is displayed in the display unit 100. That is, if a left eye image is displayed in the display unit 100, the shutter eyeglasses 20 open a sight of a left eye, and block a sight of a right eye. On the contrary, if a right eye image is displayed in the display unit 100, the shutter eyeglasses 20 open a sight of a right eye, and block a sight of a left eye.

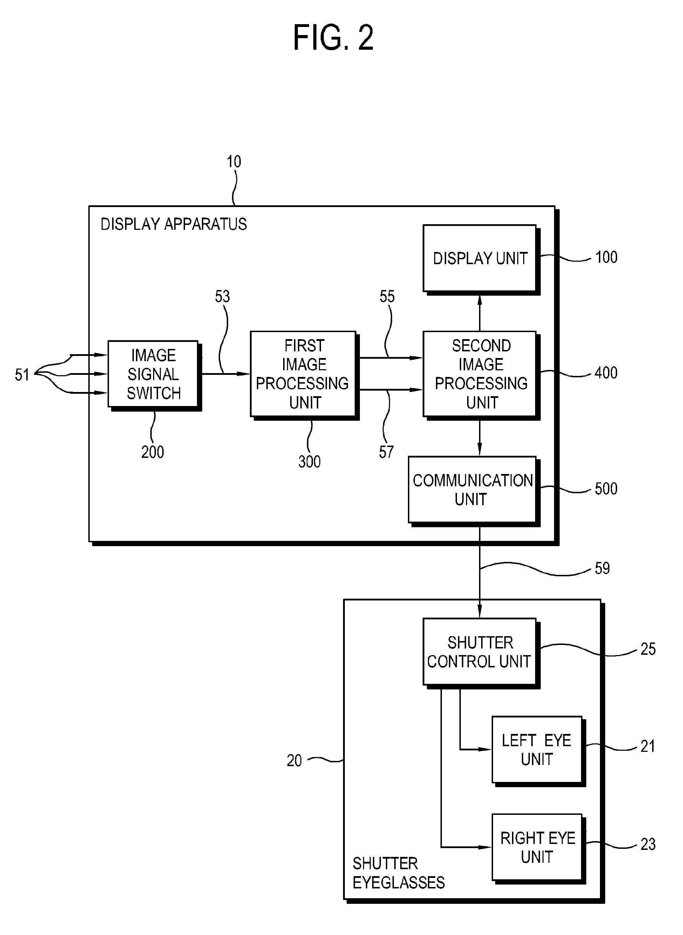

Hereinafter, configurations of the display apparatus 10 and the shutter eyeglasses 20 according to the present exemplary embodiment will be described by referring to FIG. 2. FIG. 2 is a configuration block diagram of the display apparatus 10 and the shutter glasses 20.

As shown in FIG. 2, the display apparatus 10 includes the display unit 100, an image signal switch 200 which selects and outputs one image signal 53 among at least one image signal 51 input from an outside source, a first image processing unit 300 which converts the image signal 53 into a signal type corresponding to a two-dimensional image capable of being processed by a second image processing unit 400 if the image signal 53 corresponds to a three-dimensional image signal type, and the second image processing unit 400 which processses a two-dimensional image signal 55 to be displayed in the display unit 100.

Also, the display apparatus 10 includes a communication unit 500 which transmits a shutter control signal 59 based on a predetermined logical signal with respect to the shutter eyeglasses 20. This logical signal will be described later.

In FIG. 2, the first image processing unit 300 and the image signal switch 200 are illustrated as separate configurations, but these are just an exemplary embodiment and the first image processing unit 300 and the image signal switch 200 may be configured to be integrated.

The shutter eyeglasses 20 includes a left eye unit 21 and a right eye unit 23 respectively opening and blocking entrance of a light, and a shutter control unit 25 which selectively opens and blocks the left eye unit 21 and the right eye unit 23 to correspond to the shutter control signal 59 received from the communication unit 500.

Hereinafter, each element of FIG. 2 will be described.

The display unit 100 displays an image processed by the second image processing unit 400. This configuration of the display unit 100 is not defined, but may be embodied by various display types such as a liquid crystal, a plasma, a light emitting diode, an organic light emitting diode, a surface conduction electron emitter, a carbon nano tube, a nano crystal, etc.

If the display unit 100 is embodied by a liquid crystal display panel, a plurality of horizontal lines corresponding to an image frame data are vertically arranged to display a single image frame.

The image signal switch 200 is capable of receiving at least one image signal 51 input from an outside, and selects and outputs one image signal 53 among a plurality of image signals 51 input. To select an image signal, the display apparatus 10 may include a menu key (not shown) or a remote controller (not shown) manipulated by a user.

If the image signal 53 output from the image signal switch 200 corresponds to a three-dimensional image, the first image processing unit 300 converts and outputs the image signal 53 into the image signal 55 corresponding to a two-dimensional image. Also, the first image processing unit 300 outputs the image signal 55 together with a logical signal 57 or a general purpose input/output signal representing which of a left eye image and a right eye image the image frame data in the image signal 55 corresponds to. That is, the logical signal 57 represents an arrangement, or more specifically an arrangement order, of the left eye image and the right eye image within the active section of the three-dimensional image. The configuration of the first image processing unit 300 will be described later.

If the input image signal 53 does not correspond to a three-dimensional image, the first image processing unit 300 does not convert the image signal 53, and does not output the logical signal 57 as described above.

The second image processing unit 400 processes a scaling of the image signal 55 to a size and a resolution corresponding to the display unit 100, and processes a scanning of an image frame data of the image signal 55 in the display unit 100 to be displayed in an image. For this, the second image processing unit 400 may include a central processing unit (CPU, not shown), a scaler (not shown) and a line scanner (not shown), and may further include a configuration for embodying an additional function such as an image quality reinforcement. This configuration may be separately provided, or may be provided as an integrated body according to a one chip configuration.

The second image processing unit 400 may generate the shutter control signal 59 for selectively opening and closing the left eye unit 21 and the right eye unit 23 based on the image signal 55 and the logical signal 57. For example, if an image data section of the image signal corresponds to a left eye image, a left eye image is displayed in the display unit 100 during a vertical blank section disposed next, and the next image data section corresponds to a right eye image. The second image processing unit 400 may generate the shutter control signal 59 accordingly.

The communication unit 500 transmits the shutter control signal 59 to the shutter control unit 25 of the shutter eyeglasses 20. The type of transmission used to transmit the shutter control signal 59 by the communication unit 500 is not defined, and may be embodied by an infrared ray, etc. Also, the communication unit 500 may be integrated to the display apparatus 10, or may be configured to be separated from the display apparatus 10 in a dongle type.

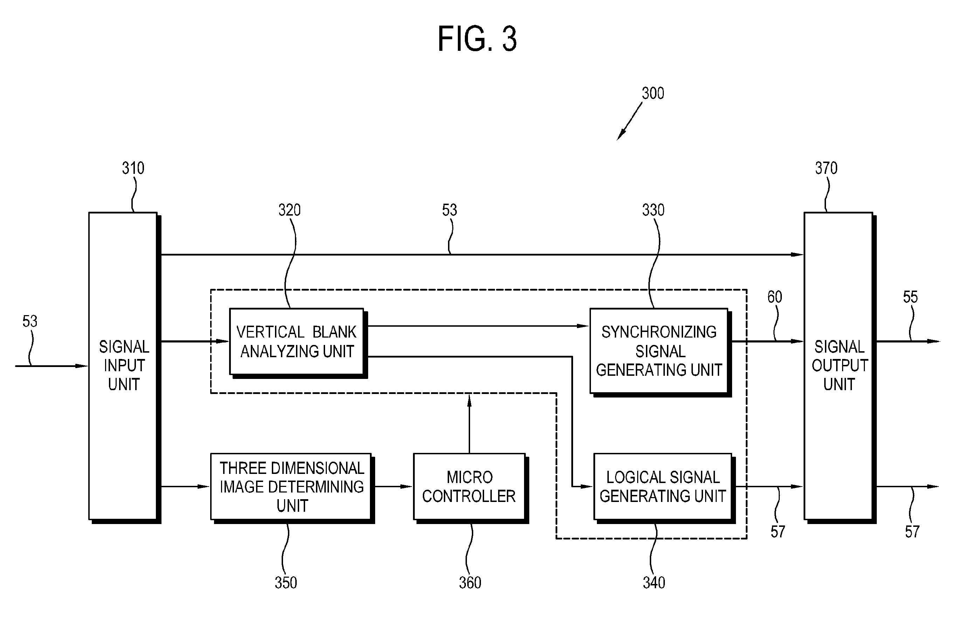

Hereinafter, the configuration of the first image processing unit 300 will be described by referring to FIG.3. FIG. 3 is a configuration block diagram related to the first image processing unit 300.

As shown in FIG. 3, the first image processing unit 300 includes a signal input unit 310 to which the image signal 53 is input, a vertical blank analyzing unit 320 which detects and analyzes vertical blank information of the image signal 53, a synchronizing signal generating unit 330 which generates the synchronizing signal 60 based on the analyzed vertical blank information, a logical signal generating unit 340 which generates a logical signal corresponding to a property of an image frame data included in the image signal 53, a three-dimensional image determining unit 350 which determines whether the image signal 53 corresponds to a three-dimensional image or not, a micro controller 360 which controls turning on and turning off of an element of the first image processing unit 300 depending on a determined result, and a signal output unit 370 which outputs the logical signal 57 together with the image signal 55 which synchronizes the synchronizing signal 60 and the image signal 53.

If the image signal 53 is input, the signal input unit 310 respectively outputs the image signal 53 to the signal output unit 370, the vertical blank analyzing unit 320 and the three-dimensional image determining unit 350. Also, the signal input unit 310 may extract and transmit only information referred to by corresponding elements from the image signal 53 with respect to the vertical blank analyzing unit 320 and the three-dimensional image determining unit 350.

If the image signal 53 corresponds to a three-dimensional image, the vertical blank analyzing unit 320 detects vertical blank information of the image signal 53. The vertical blank information includes information about a vertical synchronization section width, a vertical front porch value, a vertical back porch value and a vertical synchronization timing of the image signal 53. The vertical blank analyzing unit 320 determines a width and a timing position of a new vertical blank section for dividing left eye image frame data and right eye image frame data of the image signal 53 based on the vertical blank information. The width and the timing position of the new vertical blank section are determined such that the width of the left eye image frame data is equal to the width of the right eye image frame data.

If the three-dimensional image signal 53 is input based on a frame packing type of the HDMI, left eye image frame data and right eye image frame data exist between two vicinal vertical blank sections in the image signal 53. The vertical blank analyzing unit 320 determines a new vertical blank section to be inserted in a non-image section between the left eye image frame data and the right eye image frame data so that the left eye image frame data and the right eye frame data can be divided from each other.

The vertical blank analyzing unit 320 transmits these analyzed and determined results to the synchronizing signal generating unit 330 and to the logical signal generating unit 340.

The synchronizing signal generating unit 330 generates the synchronizing signal 60 corresponding to the vertical blank section determined in the vertical blank analyzing unit 320 to transmit to the signal output unit 370. The synchronizing signal generating unit 330 generates the synchronizing signal 60 such that left eye image frame data and right eye frame data of the image signal 53 are divided according to the width and the timing position of the new vertical blank section.

The logical signal generating unit 340 generates the logical signal 57 to transmit to the signal output unit 370, the logical signal 57 representing which of a left eye image and a right eye image an image frame data in the image signal 53 corresponds to based on a determined content of the vertical blank analyzing unit 320. The logical signal generating unit 340 refers to a determination of a vertical blank section of the image signal 53 and the synchronizing signal 60 in generating the logical signal 57, thereby synchronizing a logical level (e.g., a timing of low and high levels) to the image frame data.

The logical signal generating unit 340 determines to represent a left eye image and a right eye image to correspond to each of a low level and a high level of the logical signal 57. For example, the logical signal generating unit 340 may represent a low level of the logical signal 57 to correspond to a left eye image, and a high level of the logical signal 57 to correspond to a right eye image. On the contrary, the logical signal generating unit 340 may represent a high level of the logical signal 57 to correspond to a left eye image, and a low level of the logical signal 57 to correspond to a right eye image. In this logical signal 57, since there is no image frame data in a vertical blank section, it is unnecessary to consider whether a vertical blank section is a low level or a high level.

According to the HIMI standard, if the image signal 53 corresponds to a three-dimensional image, left eye image frame data is disposed to precede right eye image frame data between two vicinal vertical blank sections.

Based on this disposition order, the logical signal generating unit 340 determines that image frame data disposed to follow a vertical blank section of the image signal 53 is a left eye image, and image frame data disposed next thereto is a right eye image. Depending on this result, the logical signal generating unit 340 generates the logical signal 57.

The image signal 53 is input to the signal input unit 310, the three-dimensional image determining unit 350 determines whether the image signal 53 corresponds to a three-dimensional image or not. This determining method may be variously provided, and the three-dimensional image determining unit 350 may determine whether the image signal 53 corresponds to a two-dimensional image or a three-dimensional image by analyzing a register of the image signal 53.

The three-dimensional image determining unit 350 transmits a determination result to the micro controller 360.

The micro controller 360 selectively turns on or turns off the vertical blank analyzing unit 320, the synchronizing signal generating unit 330 and the logical signal generating unit 340 based on a determination result of the three-dimensional image determining unit 350.

For example, if the image signal 53 is determined to correspond to a three-dimensional image, the micro controller 360 turns on the vertical blank analyzing unit 320, the synchronizing signal generating unit 330 and the logical signal generating unit 340. Accordingly, the synchronizing signal 60 and the logical signal 57 can be generated by the above configurations.

On the other hand, if the image signal 53 is determined to correspond to a two-dimensional image, since it is unnecessary to generate the synchronizing signal 60 and the logical signal 57, the micro controller 360 turns off the vertical blank analyzing unit 320, the synchronizing signal generating unit 330 and the logical signal generating unit 340. Accordingly, a signal finally output from the signal output unit 370 is the image signal 53 which is the same as the image signal 53 input to the signal input unit 310 (i.e., the two-dimensional image signal).

The signal output unit 370 receives the image signal 53 output from the signal input unit 310, the synchronizing signal 60 output from the synchronizing signal generating unit 330, and the logical signal 57 output from the logical signal generating unit 340. The signal output unit 370 synthesizes the image signal 53 and the synchronizing signal 60 to output the new image signal 55 so that image signal 55 can be displayed in an image. For example, the image signal 53 and the synchronizing signal 60 are combined in order to generate the new image signal 55 having a third vertical blank section disposed between left eye image frame data and right eye image frame data. Also, the signal output unit 370 outputs the logical signal 57 together with the new image signal 55.

Hereinafter, processing operations of the three-dimensional image determining unit 350 and the vertical blank analyzing unit 320 will be described in detail by referring to Table 1. Table 1 represents several examples of a video ID code (VIC) which the HIMI standard regulates, and a part of an image frame data and a vertical blank information of each VIC.

**Table 1**

| VIC | description | Vact | Vact_v | Vact_b | Vblank | Vfront | Vsync | Vback |
|---|---|---|---|---|---|---|---|---|
| 32 | 1080p, 23.98/24Hz | 2205 | 1080 | 45 | 45 | 4 | 5 | 36 |
| 4 | 720p, 59.94/60Hz | 1470 | 720 | 30 | 30 | 5 | 5 | 20 |
| 19 | 720p, 50Hz | 1470 | 720 | 30 | 30 | 5 | 5 | 20 |

Each label in the above Table means as follows.
VIC: video ID code,
Description: resolution information,
Vact: active section width which is an image frame data section formed between two vicinal vertical blank sections,
Vact_v: left eye image or right eye image frame data section width in active section,
Vact_b: non image section width in active section,
Vblank: vertical blank section width,
Vfront: vertical front porch value,
Vsync: vertical synchronization section width, and
Vback: vertical back porch value.

As described above, if the VIC of a certain image signal is present, various information about a signal configuration of the corresponding image signal can be obtained.

The three-dimensional image determining unit 350 may analyze the image signal 53 input to the signal input unit 310 to detect the VIC of the corresponding image signal 53, and may determine whether the corresponding image signal 53 corresponds to a three-dimensional image or not based on a detected VIC.

The vertical blank analyzing unit 320 determines a new vertical blank section among the values represented in Table 1 to be inserted in a non-image section of an active section. Since the second image processing unit 400 processes an image signal based on detecting vertical blank sections, if the new vertical blank section is not generated, an active section begins to deviate from a range which is capable of being processed by the second image processing unit 400. Accordingly, an image fails to be normally displayed.

According to Table 1, the values of Vact_b and Vblank are the same. That is, the vertical blank analyzing unit 320 determines a new vertical blank section to have the same width as an existing vertical blank section. Also, in determining a timing position of a new vertical blank section, the vertical blank analyzing unit 320 determines that each width of a left eye frame data and a right eye frame data in an active section is the same.

Also, since the value of Vblank is the same as the sum of Vfront, Vsync and Vback, the vertical blank analyzing unit 320 may obtain the width of a vertical blank section by detecting a vertical synchronizing section width, a vertical front porch value and a vertical back porch value of the image signal 53.

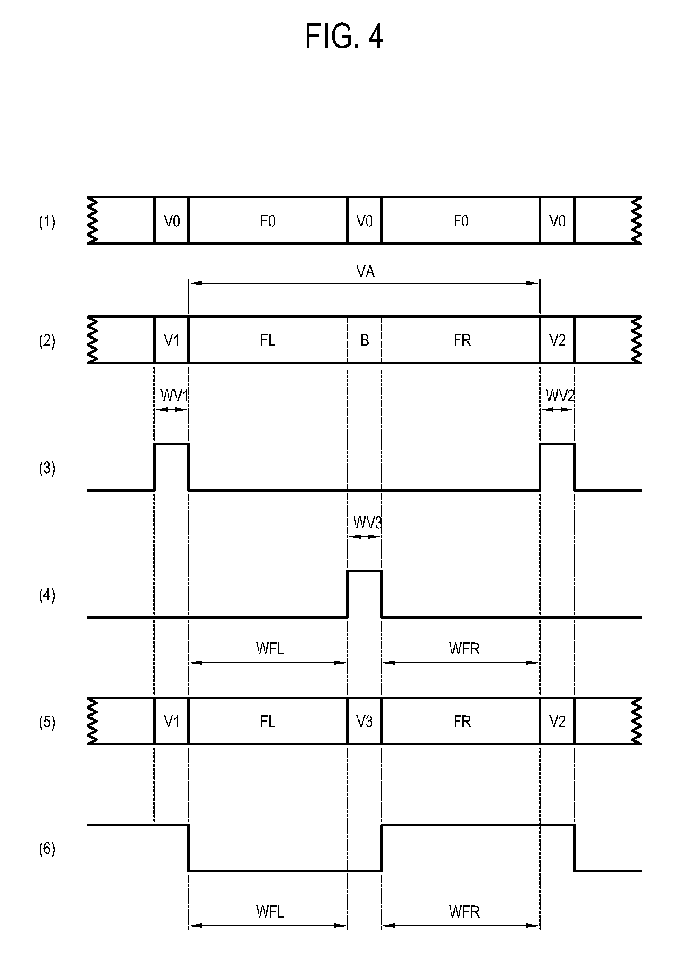

Hereinafter, an exemplary embodiment in which the first image processing unit 300 converts a three-dimensional image signal into a type of a two-dimensional image signal, and generates the logical signal 57 will be described by referring to FIG. 4. FIG. 4 schematically illustrates configurations of an image signal, a synchronizing signal and a logical signal according to an exemplary embodiment of the present invention.

As shown in FIG. 4, an image signal, a synchronizing signal and a logical signal with a timing position are partially represented.
(1) represents an image signal corresponding to a two-dimensional image. A vertical blank section V0 is disposed between each image frame data F0. Unlike a three-dimensional image, the two-dimensional image is not divided into a left eye image and a right eye image, and there exists a single image frame data F0 between two vicinal vertical blank sections V0.
(2) represents an image signal corresponding to a three-dimensional image. An active section VA is formed between two vicinal vertical blank sections V1 and V2, and there exist two image frame data sections of a left eye image frame data section FL and a right eye image frame data section FR in the active section VA. Also, there exists a non-image section B between the left eye image frame data section FL and the right eye image frame data section FR.

The second image processing unit 400 is capable of recognizing the vertical blank sections V1 and V2, but is incapable of recognizing the non-image section B in the active section VA. Accordingly, the first image processing unit 300 determines a new vertical blank section in the non-image section B, by determining features thereof, so that the second image processing unit 400 can recognize the non-image section via the new vertical blank section.
(3) is a synchronizing signal corresponding to the vertical blank sections V1 and V2 in the three-dimensional image signal in (2). Here, the width WV1 of the first vertical blank section V1 and the width WV2 of the second vertical blank section V2 are the same. There appears no section corresponding to the non-image section B in the synchronizing signal of (3). Accordingly, the first image processing unit 300 generates a synchronizing signal like that shown in (4).
(4) is a synchronizing signal representing a new vertical blank section determined by synchronizing signal generating unit 330 to correspond to the non image section B. The width WV3 of a third vertical blank section is determined to be the same as WV1 and WV2 as described above, and divides the left eye image frame data section FL and the right eye image frame data section FR.
(5) is an image signal newly generated when the image signal of (2) is synchronized with the synchronizing signal of (4), that is, when the synchronizing signal of (4) is synthesized or combined with the image signal of (2). In comparison with the image signal of (2), in the image signal of (5), there appears a third vertical blank section V3 between the first vertical blank section V1 and the second vertical blank section V2. The third vertical blank section V3 divides the left eye image frame data section FL and the right eye image frame data section FR. That is, the image signal of (5) is in a state converted into a type corresponding to a two-dimensional image like the image signal of (1).

Each width WFL and WFR of the left eye image frame data section FL and the right eye image frame data section FR are determined to be the same. That is, the sum of the widths of WFL, WFR and WV3 is the same as the width VA of the active section of the image signal of (2).

Since it is not known which of a left eye image and a right eye image each of the sections FL and FR in the image signal of (5) corresponds to, the first image processing unit 300 generates a logical signal like that shown in (6).
(6) is a logical signal having logic levels which represent the sections FL and FR of the image signal of (5) corresponding to a left eye image or a right eye image. According to FIG. 4, (6) is represented as a low level in case of a left eye image, and represented as a high level in case of a right eye image. However, the opposite may be possible depending on a design method. Since the vertical blank sections V1, V2 and V3 are not an image frame data section like the sections FL and FR, it is unnecessary to consider a logic level (i.e., a low level or a high level) in this section. Therefore, the logic level within the logical signal (6) changes its state only when there is a change between a left eye image frame data section FL and a right eye image frame data section FR in the image signal. That is, the logic level in the vertical blank sections V1, V2 and V3 is the same as the level in the previous section FL or FR.

Accordingly, the first image processing unit 300 determines a new vertical blank section V3 in the non-image section B in the active section VA to convert a three-dimensional image signal into a two-dimensional image type signal, and to generate a logical signal indicating whether an image frame data is a left eye image or a right eye image.

Accordingly, although the second image processing unit 400 fails to recognize the non-image section B, an image signal can be normally displayed in an image.

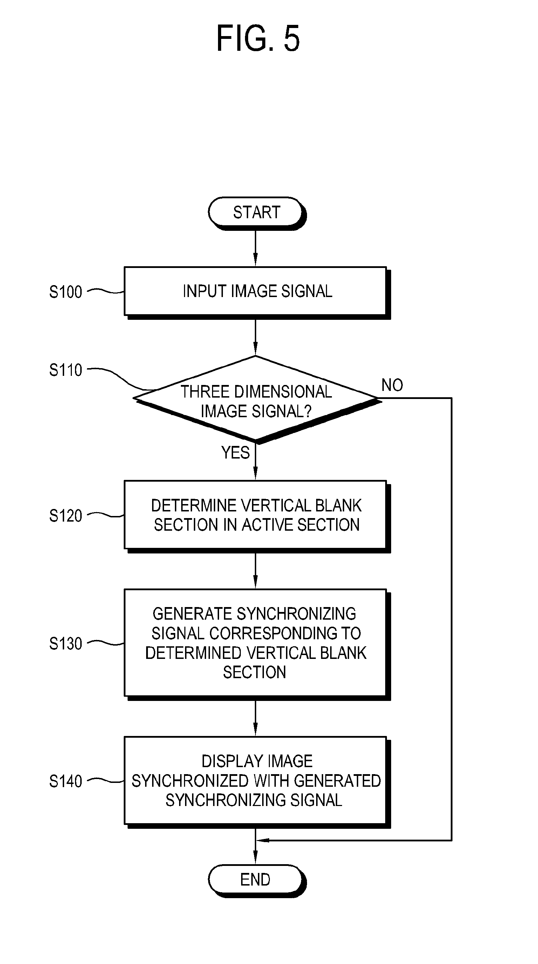

Hereinafter, a control method of the display apparatus 10 according to an exemplary embodiment of the present invention will be described by referring to FIG. 5. FIG. 5 is a control flowchart illustrating this process.

As shown in FIG. 5, if an image signal is input (S100), the first image processing unit 300 determines whether the image signal is a three-dimensional image signal or not (S110).

If the first image processing unit 300 determines that the image signal is a three-dimensional image signal, the first image processing unit 300 determines a new vertical blank section in an active section (S120). The new vertical blank section corresponds to a non-image section in an active section. The first image processing unit 300 generates a synchronizing signal corresponding to the determined vertical blank section (S130).

The second image processing unit 400 displays the image signal in an image synchronized with a synchronizing signal generated in the first image processing unit 300 (S140).

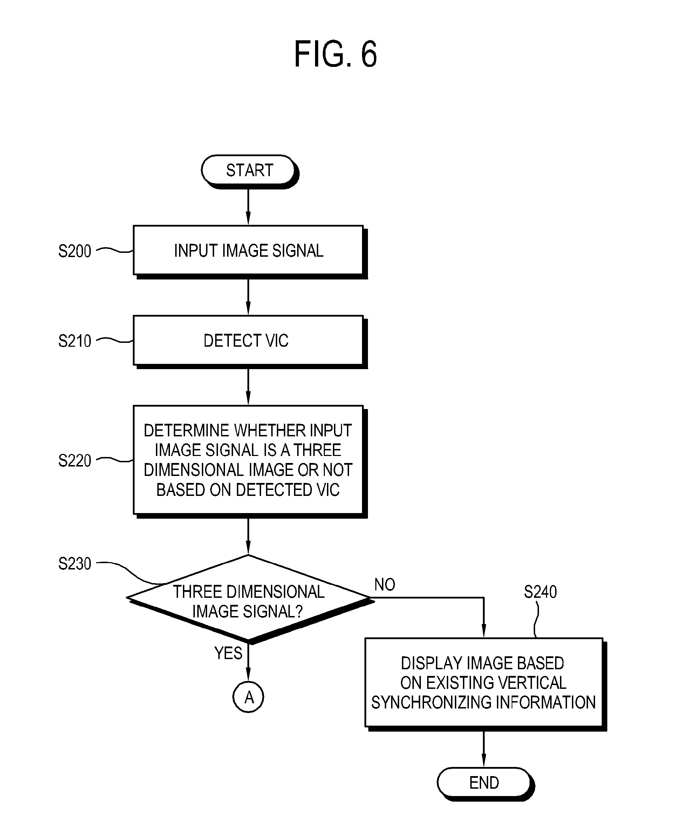

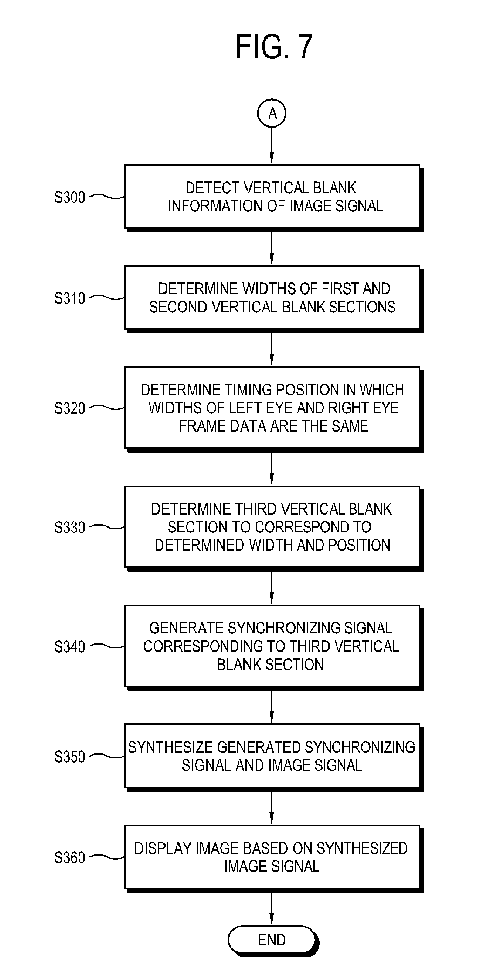

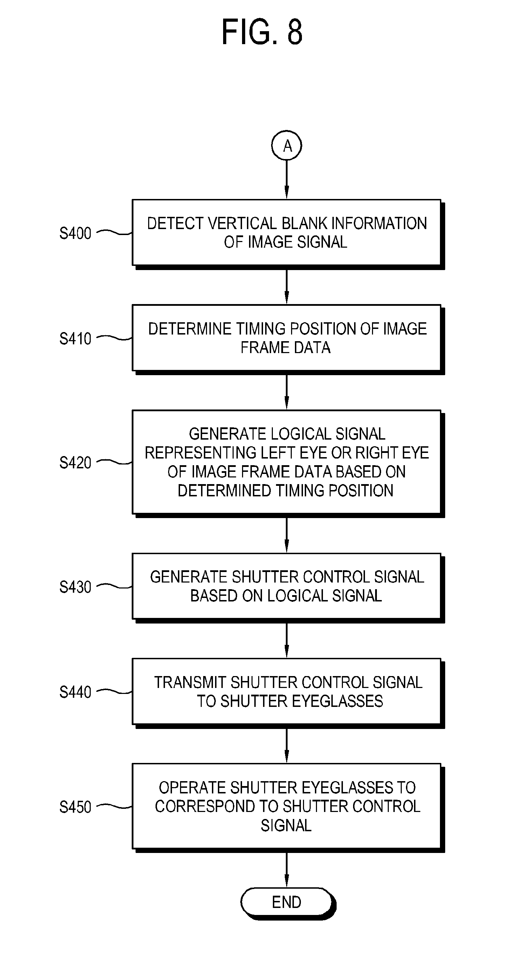

Hereinafter, the control process in FIG. 5 will be exemplarily described more in detail by referring to FIGs. 6 to 8. FIG. 6 is a control flowchart illustrating a process of determining whether an input image signal corresponds to a three-dimensional image or not, FIG. 7 is a control flowchart illustrating a process of generating a new synchronizing signal and displaying an image signal in an image synchronized with the synchronizing signal, and FIG. 8 is a control flowchart illustrating a process of generating a logical signal and a shutter control signal and operating the shutter eyeglasses 20 depending thereon.

As shown in FIG. 6, if an image signal is input (S200), the first image processing unit 300 analyzes the image signal to detect a VIC (S210). The first image processing unit 300 determines whether the corresponding image signal corresponds to a three-dimensional image or not by using the detected VIC (S220). For this, the first image processing unit 300 may store a predetermined table related to the VIC.

If the first image processing unit 300 determines that the image signal is a three-dimensional image signal (S230), the first image processing unit 300 processes the image signal, as described later. However, if the first image processing unit 300 determines that the image signal is not a three-dimensional image signal, the first image processing unit 300 displays an image based on existing vertical synchronizing information of the image signal.

As shown in FIG. 7, if the image signal is determined to be a three-dimensional image signal in the operation S230 of FIG. 6, the first image processing unit 300 detects vertical blank information of the image signal (S300).

The first image processing unit 300 determines the widths of vicinal first and second vertical blank sections based on the vertical blank information (S310), and determines a timing position which makes each width of left eye and right eye image frame data be equal to one another (S320). The first image processing unit 300 determines features of a new third vertical blank section to correspond to the determined width and timing position (S330). Also, the first image processing unit 300 generates a synchronizing signal corresponding to the third vertical blank section (S340).

The first image processing unit 300 synthesizes the generated synchronizing signal and the input image signal to output a new image signal (S350).

The second image processing unit 400 displays an image based on the synthesized image signal (S360).

Also, as shown in FIG. 8, if the image signal is determined to be a three-dimensional image signal in the operation S230 of FIG. 6, the first image processing unit 300 detects vertical blank information of the image signal (S400). Based on this information, the first image processing unit 300 determines a timing position of an image frame data (S410), and generates a logical signal representing whether the image frame data is a left eye image or a right eye image to be appropriate to the determined timing position (S420).

The second image processing unit 400 generates a shutter control signal based on the logical signal (S430), and transmits the shutter control signal to the shutter eyeglasses 20 (S440). The shutter eyeglasses 20 operates to correspond to the received shutter control signal (S450).

According to the above processes, if an input image signal corresponds to a three-dimensional image, the display apparatus 10 according to the present exemplary embodiment generates a new vertical blank section in a non-image section in an active section, and generates a logical signal representing whether an image frame data corresponds to a left eye image or a right eye image, thereby displaying a three-dimensional image.

As described above, the first image processing unit 300 is described to be provided separately with the image signal switch 200, but the present invention is not defined thereto.

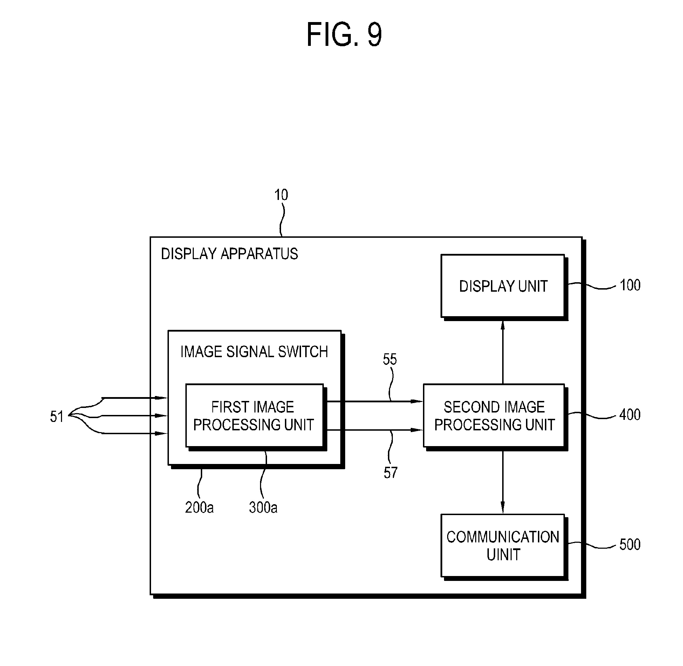

For example, as shown in FIG. 9, the first image processing unit 300a may be configured to be integrated to the image signal switch 200a, or may be provided to be a sub-element of the image signal switch 200a. Each element including the first image processing unit 300a shown in FIG. 9 may employ the configurations described above.

In the exemplary embodiment, the second image processing unit 400 is described to generate the shutter control signal 59 based on the logical signal 57, but the present invention is not defined thereto. For example, the first image processing unit 300 generates the logical signal 57, and may generate and output the shutter control signal 59 based thereon, or a separate configuration may be provided to the communication unit 500 to generate the shutter control signal 59.

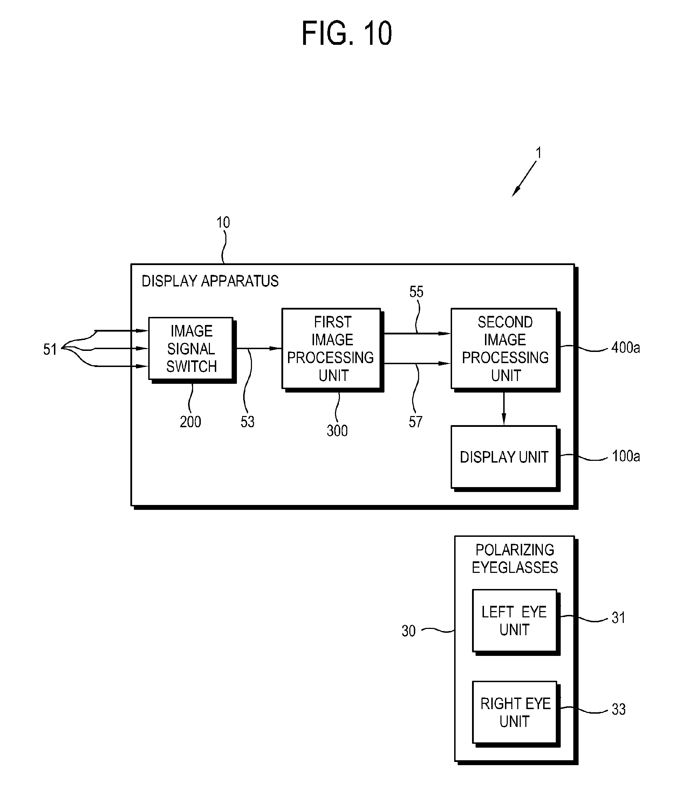

In the above exemplary embodiment, the display system 1 is described to include the shutter eyeglasses 20, but the present invention is not defined thereto. For example, the display system 1 may be embodied to include polarizing eyeglasses 30 instead of the shutter eyeglasses 20, and this exemplary embodiment will be described by referring to FIG. 10.

FIG. 10 is a configuration block diagram illustrating a display system 1 according to another exemplary embodiment of the present invention.

As shown in FIG. 10, a display system 1 according to the present exemplary embodiment includes a display apparatus 10 and the polarizing eyeglasses 30.

The display apparatus 10 includes a display unit 100a, an image signal switch 200, a first image processing unit 300 and a second image processing unit 400a. Here, the image signal switch 200 and the first image processing unit 300 may have the substantially same configurations as the exemplary embodiment described above.

In processing a three-dimensional image signal 55 output from the first image processing unit 300, the second image processing unit 400a processes the three-dimensional image signal so that a left eye image and a right eye image can be mixed in a single screen of the display unit 100a. This displaying method may employ various methods. For example, the second image processing unit 400a alternately forms horizontal scanning lines corresponding to left eye image frame data and right eye image frame data to the display unit 100a, and each horizontal scanning line respectively corresponding to the left eye image and the right eye image is provided so that the polarity of a polarizing ingredient is different.

The polarizing eyeglasses 30 are provided so that the left eye unit 31 and the right eye unit 33 can transmit a polarizing ingredient having different polarities, and accordingly, a left eye image and a right eye image can be respectively projected to a left eye and a right eye of a user.

There are various other methods of displaying a left eye image and a right eye image in the display apparatus 10. An alternate matrix arrangement of a pixel unit of the display unit 100a may be formed, or a left eye image and a right eye image may be alternately displayed by a vertical pixel line. Alternatively, by applying a liquid crystal polarizing switch panel to the display unit 100a, the polarity of a polarizing ingredient may be changed by a screen unit, thereby displaying an image.

In this exemplary embodiment (e.g., FIG. 10), unlike the exemplary embodiments described above, the configuration of the communication unit 500 transmitting a shutter control signal to the shutter eyeglasses 20 is not necessary. In this case, the logical signal 57 may be not generated, or may be referred to when the second image processing unit 400a forms a scanning line to the display unit 100a.

Although a few exemplary embodiments of the present invention have been shown and described, it will be appreciated by those skilled in the art that changes may be made in these exemplary embodiments without departing from the principles and spirit of the invention, the scope of which is defined in the appended claims and their equivalents.

## Claims

1. A control method of a display apparatus, comprising:
receiving a three-dimensional image signal comprising left eye image data and right eye image data between successive first and second vertical blank sections;
generating a third vertical blank section which divides the left eye image data and the right eye image data between the first and second vertical blank sections of the received image signal if the received image signal is determined as a three-dimensional image signal; and
displaying an image based on the image signal having the generated third vertical blank section.

2. The control method according to claim 1, wherein the three-dimensional image signal is configured by a frame packing type according to high definition multimedia interface (HDMI) standards.

3. The control method according to claim 2, wherein the image signal comprises a video identification (ID) code based on the HDMI standards, and
the generating the third vertical blank section comprises:
detecting the video ID code of the received image signal; and
determining whether the received image signal corresponds to a two-dimensional image or a three-dimensional image on the basis of the detected video ID code.

4. The control method according to claim 3, further comprising displaying the received image signal as an image without generating the third vertical blank section if the received image signal is determined as a two-dimensional image signal on the basis of the detected video ID code.

5. The control method according to any of claims 1-4, wherein the generating the third vertical blank section comprises setting the third vertical blank section with the same width as the first and second vertical blank sections.

6. The control method according to claim 5, wherein the setting the third vertical blank section with the same width as the first and second vertical blank sections comprises:
detecting vertical blank information including at least one of a vertical synchronization section width, a vertical front porch value, a vertical back porch value and a vertical synchronization timing, from the received image signal; and
setting the third vertical blank section on the basis of the detected vertical blank information.

7. The control method according to any of claims 1-6, wherein the generating the third vertical blank section comprises setting the left eye image data and the right eye image data, divided by the third vertical blank section, to have the same width.

8. A display apparatus comprising:
a signal input unit which receives a three-dimensional image signal comprising left eye image data and right eye image data between successive first and second vertical blank sections; and
an image processing unit which generates a third vertical blank section which divides the left eye image data and the right eye image data between the first and second vertical blank sections of the received image signal if the received image signal is determined as a three-dimensional image signal, and displays an image on a display unit on the basis of the image signal having the generated third vertical blank section.

9. The display apparatus according to claim 8, wherein the three-dimensional image signal is configured by a frame packing type according to high definition multimedia interface (HDMI) standards.

10. The display apparatus according to claim 9, wherein the received image signal comprises a video identification (ID) code based on the HDMI standards, and
the image processing unit detects the video ID code of the received image signal, and determines whether the received image signal corresponds to a two-dimensional image or a three-dimensional image on the basis of the detected video ID code.

11. The display apparatus according to claim 10, wherein the image processing unit displays the received image signal as an image without generating the third vertical blank section if the received image signal is determined as a two-dimensional image signal on the basis of the detected video ID code.

12. The display apparatus according to any of claims 8-11, wherein the image processing unit sets the third vertical blank section with the same width as the first and second vertical blank sections.

13. The display apparatus according to claim 12, wherein the image processing unit detects vertical blank information including at least one of a vertical synchronization section width, a vertical front porch value, a vertical back porch value and a vertical synchronization timing, from the received image signal; and sets the third vertical blank section on the basis of the detected vertical blank information.

14. The display apparatus according to any of claims 8-13, wherein the image processing unit sets the left eye image data and the right eye image data, divided by the third vertical blank section, to have the same width.
